# EUROPÄISCHE PATENTSCHRIFT

(11) **EP 3 556 647 B1**
(45) Veröffentlichungstag und Bekanntmachung des Hinweises auf die Patenterteilung: **17.11.2021**
(21) Anmeldenummer: 19168819.1
(22) Anmeldetag: 12.04.2019
(51) Int. Cl.: B62M 9/125, B62K 25/02

(54) **VORRICHTUNG ZUR BEFESTIGUNG EINES SCHALTWERKS AN EINEM FAHRRADRAHMEN**
DEVICE FOR ATTACHING A SWITCHGEAR TO A BICYCLE FRAME
DISPOSITIF DE FIXATION D'UN DISPOSITIF DE COMMUTATION À UN CADRE DE BICYCLETTE

(30) Priorität: 20.04.2018 DE 102018206134; 26.11.2018 DE 102018220285
(43) Veröffentlichungstag der Anmeldung: 23.10.2019
(73) Patentinhaber: YT Industries GmbH, 91353 Hausen (DE)
(72) Erfinder: Wecker, Daniel, 91301 Forchheim (DE); Bosert, Martin, 91353 Hausen (DE)
(74) Vertreter: Rau, Schneck & Hübner Patentanwälte Rechtsanwälte PartGmbB

(56) Entgegenhaltungen:
- EP-A1- 2 527 239
- EP-A1- 2 982 587
- EP-A1- 3 187 402
- EP-A1- 3 556 643
- EP-A2- 1 415 901
- DE-U1-202014 103 414

## Beschreibung

Die vorliegende Patentanmeldung nimmt die Prioritäten der deutschen Patentanmeldungen DE 10 2018 206 134.3 und DE 10 2018 220 285.0 in Anspruch.

Die Erfindung betrifft eine Vorrichtung zur Befestigung eines Schaltwerks an einem Fahrradrahmen. Die Erfindung betrifft weiterhin einen Fahrradrahmen mit einer derartigen Vorrichtung sowie ein Fahrrad mit einem derartigen Rahmen.

Bei Fahrrädern mit Kettenschaltung im Bereich des hinteren rechten Ausfallendes ist ein Schaltwerk am Fahrradrahmen angebracht. Zur Befestigung des Schaltwerks kann ein sogenanntes Schaltauge vorgesehen sein. Die EP 2 982 587 A1, EP 2 527 239 A1 und DE 20 2014 103 414 U1 zeigen Schaltaugen. Dokument DE 20 2014 104 414 U1 zeigt ein gattungsgemäßes Schaltauge.

Es ist eine Aufgabe der Erfindung, einen Fahrradrahmen, insbesondere die Befestigung eines Schaltwerks an diesem, zu verbessern.

Diese Aufgabe wird durch eine Vorrichtung zur Befestigung eines Schaltwerks an einem Fahrradrahmen gemäß Anspruch 1 sowie einen Fahrradrahmen mit einer derartigen Vorrichtung gelöst.

Der Kern der Erfindung besteht darin, eine Vorrichtung zur Befestigung eines Schaltwerks an einem Fahrradrahmen mit einem Schutzelement auszubilden, welches den Fahrradrahmen vor Beschädigungen durch eine herabspringende Kette schützt.

Bei der Vorrichtung handelt es sich um ein Schaltauge.

Erfindungsgemäß wurde erkannt, dass es zu Beschädigungen des Fahrradrahmens, insbesondere dessen Hinterbau, insbesondere im Bereich des Ausfallendes und/oder der rechten hinteren Sitzstrebe, kommen kann, wenn die Kette von einem der Ritzel herabspringt, beispielsweise bei Fehlfunktion der Schaltung. Es kann insbesondere zu einer Beschädigung des Fahrradrahmens kommen, wenn sich eine herabspringende Kette zwischen dem kleinsten Ritzel eines Zahnkranzes und dem Fahrradrahmen verklemmt.

Eine hierdurch verursachte Beschädigung des Fahrradrahmens kann erfindungsgemäß durch eine Ausbildung der Vorrichtung zur Befestigung des Schaltwerks am Fahrradrahmen mit einem Schutzelement zuverlässig verhindert werden.

Gemäß einer nicht beanspruchten Alternative ist die Vorrichtung einteilig ausgebildet. Das Schutzelement ist insbesondere einteilig mit einem Grundkörper des Schaltauges ausgebildet. Es kann insbesondere als plattenförmiger oder profilierter Fortsatz eines derartigen Grundkörpers des Schaltauges ausgebildet sein.

Die erfindungsgemäße Vorrichtung ist mehrteilig ausgebildet. Das Schutzelement ist als separates Bestandteil auf einen Grundkörper des Schaltauges aufgesetzt. Es ist auf den Grundkörper des Schaltauges aufgesteckt. Das Schutzelement kann aus einem anderen Material sein als das Schaltauge.

Gemäß einem weiteren Aspekt der Erfindung ist das Schutzelement derart ausgebildet, dass es am Fahrradrahmen anliegt und/oder diesen umgreift.

Das Schutzelement liegt insbesondere von innen am Fahrradrahmen, insbesondere im Bereich eines Ausfallendes und/oder im Bereich der rechten Sitzstrebe, an. Es kann insbesondere einseitig, zweiseitig oder dreiseitig in diesem Bereich am Fahrradrahmen anliegen. Es kann den Fahrradrahmen vorzugsweise in diesem Bereich umgreifen. Es kann beispielsweise schienenartig ausgebildet sein und eine Oberkante des unteren Endes der Sitzstrebe umgreifen. In diesem Fall ist das Schutzelement insbesondere nach unten offen ausgebildet.

Gemäß einer vorteilhaften Ausführungsform weist das Schutzelement eine Form auf, welche an eine Form eines gegebenen Fahrradrahmens im Bereich dessen rechten Ausfallendes und/oder im Bereich eines unteren Endes dessen rechter Sitzstrebe angepasst ist. Dies führt zu einer besonders vorteilhaften optischen Integration der Befestigungsvorrichtung, insbesondere deren Schutzelements, im Fahrradrahmen.

Gemäß einem weiteren Aspekt der Erfindung ist das Schutzelement aus Aluminium, einer Aluminiumlegierung, Stahl, Titan, Carbon, Kunststoff oder Gummi. Es kann insbesondere aus 6061-Aluminium oder 7075-Aluminim sei.

Im Falle einer einteiligen Ausbildung des Schaltauges ist insbesondere das gesamte Schaltauge aus einem dieser Materialien ausgebildet.

Gemäß einem weiteren Aspekt der Erfindung weist die Vorrichtung ein Befestigungselement zur Befestigung eines Schaltwerkkabels oder eines anderen Zubehörteils auf.

Dies ist insbesondere bei Verwendung einer elektrischen Schaltgruppe vorteilhaft. Mit Hilfe des Befestigungselements ist eine sichere Befestigung und Positionierung des Schaltwerkkabels am Schaltauge beziehungsweise im Bereich des unteren Endes der Sitzstrebe des Fahrradrahmens möglich.

Das Befestigungselement kann einen oder mehrere Stege aufweisen. Das Befestigungselement kann auch als Aussparung, insbesondere als nutförmige Aussparung, ausgebildet sein. Das Befestigungselement kann auch eine oder mehrere Schrauben und/oder Federelemente aufweisen.

Die Vorteile eines Fahrradrahmens mit einer derartigen Vorrichtung zur Befestigung des Schaltwerks ergeben sich aus den bereits beschriebenen. Der Fahrradrahmen ist insbesondere durch die Vorrichtung vor Beschädigungen durch eine herabspringende Kette geschützt.

Gemäß einer vorteilhaften Ausführungsform ist die Vorrichtung zur Befestigung des Schaltwerks austauschbar. Sie kann insbesondere am Fahrradrahmen angeschraubt, in eine Aufnahme im Fahrradrahmen eingesteckt oder auf diesen aufgesteckt sein.

Die Austauschbarkeit des Schaltauges ermöglicht es insbesondere, dieses im Falle einer Beschädigung auf einfache Weise zu ersetzen.

Gemäß einem weiteren Aspekt der Erfindung ist die Vorrichtung auf der Innenseite des rechten Ausfallendes angeordnet.

Sie ist damit bei einem vollständig montierten Fahrrad von außen vom Rahmen und dem Schaltwerk im Wesentlichen vollständig verdeckt. Gemäß einem weiteren Aspekt der Erfindung überdeckt das Schutzelement einen sich an das rechte Ausfallende anschließenden Bereich der Sitzstrebe. Hierdurch wird dieser Bereich besonders geschützt.

Gemäß einem weiteren Aspekt der Erfindung weist der Fahrradrahmen Rahmenteile aus einem oder mehreren der folgenden Materialien auf: Carbon, Aluminium, einer oder mehrerer Aluminiumlegierungen, Titan, Stahl, Holz, Bambus, Kunststoff.

Der Rahmen kann insbesondere aus einem oder mehrerer dieser Materialien hergestellt sein oder vollständig daraus bestehen. Bei dem Fahrradrahmen handelt es sich insbesondere um einen Carbonrahmen oder einen Aluminiumrahmen insbesondere um einen Fahrradrahmen mit einem Hinterbau, insbesondere Sitzstreben, aus Carbon, Aluminium oder einer Aluminiumlegierung.

Die Vorteile eines Fahrrads mit einem derartigen Fahrradrahmen ergeben sich aus denen des Rahmens.

Bei dem Fahrrad handelt es sich insbesondere um ein Mountainbike, insbesondere ein vollgefedertes Mountainbike. Bei einem derartigen Fahrrad ist der Schutz des Hinterbaus besonders wichtig. Das Schaltauge kann jedoch auch an einem Rennrad, einem Tourenrad oder einem Elektrofahrrad vorteilhaft eingesetzt werden.

Weitere Vorteile und Details der Erfindung ergeben sich aus der Beschreibung von Ausführungsbeispielen anhand der Figuren. Es zeigen:
- Fig. 1: exemplarisch eine perspektivische Ansicht eines Fahrradrahmens,
- Fig. 2: eine Ausschnittsvergrößerung des Bereichs II aus Fig. 1,
- Fig. 3: eine Ansicht des Schaltauges gemäß den Fig. 1 und 2,
- Fig. 4: eine Ansicht des Schaltauges gemäß Fig. 3 von der anderen Seite,
- Fig. 5: eine Ansicht einer weiteren Ausführung eines Schaltauges,
- Fig. 6: eine Ansicht gemäß Fig. 3 des Schaltauges gemäß Fig. 5,
- Fig. 7: eine Ansicht einer weiteren Variante des Schaltauges und
- Fig. 8: eine Ansicht des Schaltauges gemäß Fig. 7 im am Fahrradrahmen befestigten Zustand.

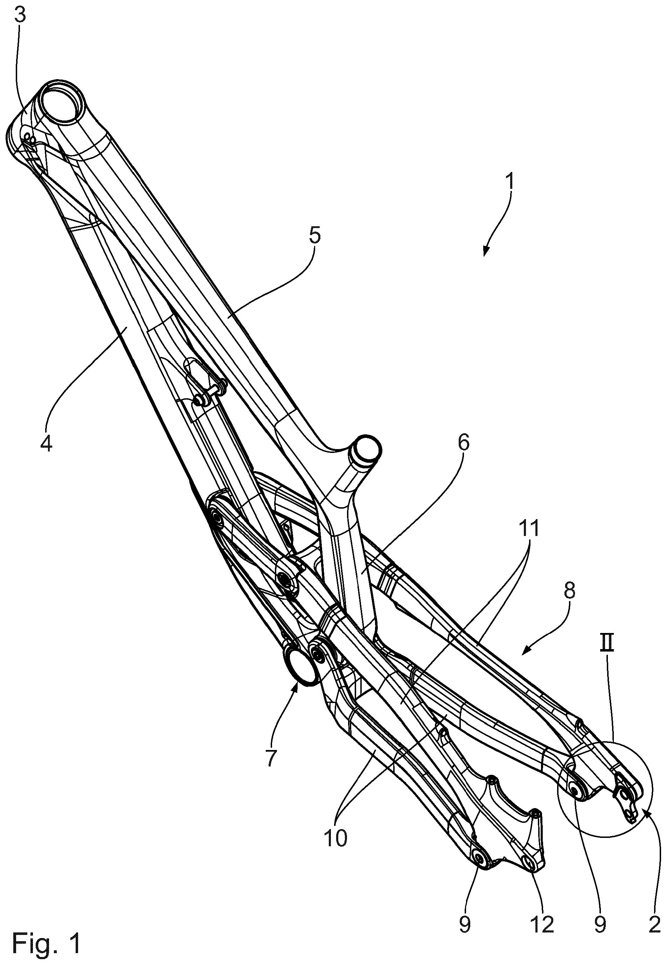

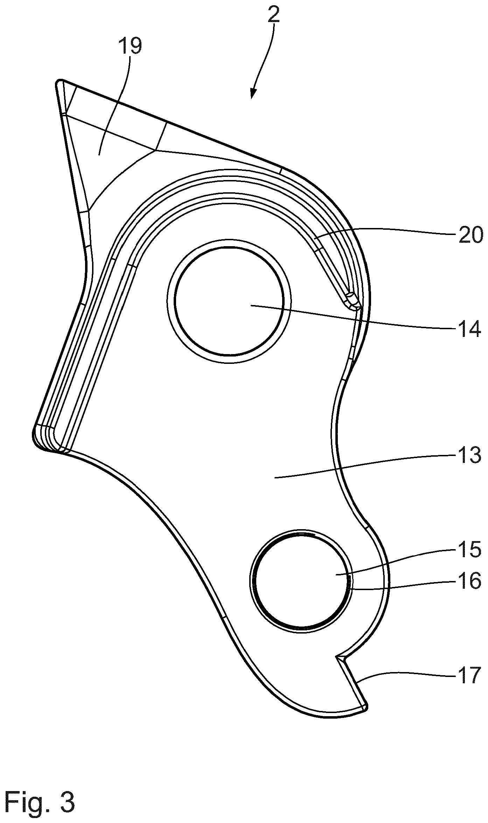

Im Folgenden wird unter Bezugnahme auf die Fig. 1 bis 4 eine erste Variante eines Fahrradrahmens 1 mit einem besonders ausgebildeten Schaltauge 2 beschrieben. Die Erfindung ist nicht auf die speziellen Details des in den Figuren dargestellten Fahrradrahmens 1 beschränkt. Sie ist insbesondere auch bei anderen Fahrrädern, insbesondere bei vollgefederten Mountainbikes, Hardtails (nur vorne gefedertes Mountainbike), ungefederten Mountainbikes, Tourenrädern, Rennrädern, Zeitfahrrädern, Elektrofahrrädern oder anderen Fahrrädern einsetzbar.

Der Fahrradrahmen 1 umfasst insbesondere ein Steuerrohr 3, welches auch als Steuerkopfrohr bezeichnet wird. Der Fahrradrahmen 1 umfasst ein Unterrohr 4 und ein Oberrohr 5. Er umfasst ein Sitzrohr 6 und eine Tretlageraufnahme 7.

Weiterhin umfasst der Fahrradrahmen 1 einen Hinterbau 8. Bei dem in der Fig. 1 dargestellten Fahrradrahmen 1 handelt es sich um einen sogenannten Viergelenker mit einem Gelenk 9 zwischen den Kettenstreben 10 und den Sitzstreben 11.

Die Sitzstreben 11 weisen an ihrem hinteren/unteren Ende eine Aufnahme 12 zur Aufnahme einer Hinterradachse auf. Bei dem in der Fig. 1 dargestellten Fahrradrahmen 1 ist die Aufnahme 12 als Durchgangsbohrung für eine Steckachse ausgebildet. Die Aufnahme 12 kann auch einseitig offen ausgebildet sein. Sie wird in beiden Fällen auch als Ausfallende bezeichnet.

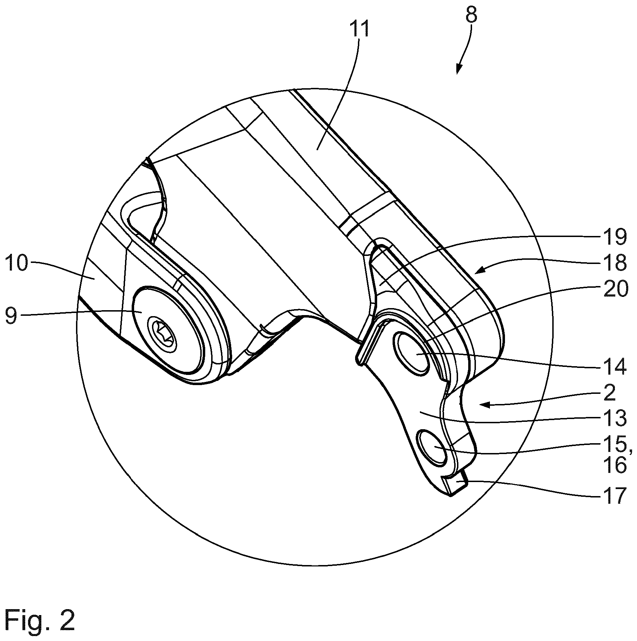

Der Bereich des Hinterbaus 8, insbesondere der rechten Sitzstrebe 11, um das Ausfallende herum ist in der Fig. 2 vergrößert dargestellt. In dieser Figur ist insbesondere das Schaltauge 2 zu erkennen. Es bildet eine Vorrichtung zur Befestigung eines Schaltwerks am Fahrradrahmen 1.

Das Schaltauge 2 weist einen Grundkörper 13 auf. Im Grundkörper 13 ist eine erste Aufnahme 14 zur Aufnahme einer Hinterradachse angeordnet. Die erste Aufnahme 14 kann als Durchgangsbohrung ausgebildet sein. Sie kann insbesondere mit einem Innengewinde versehen sein. Sie kann auch U-förmig, d. h. einseitig offen, ausgebildet sein (in der Fig. 2 nicht dargestellt).

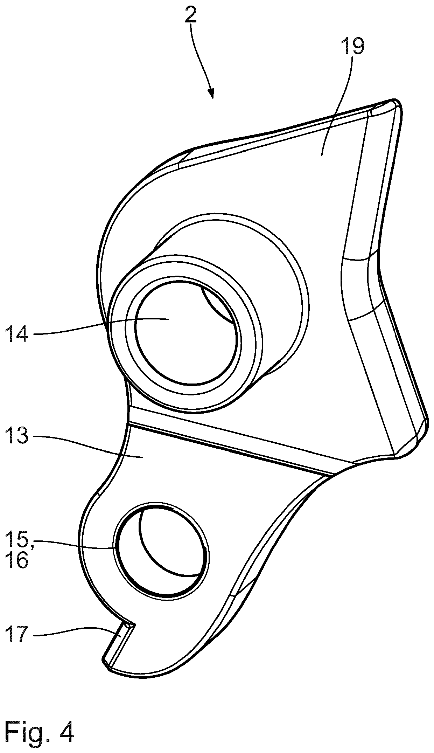

Wie aus der Figur 4 ersichtlich ist, kann die erste Aufnahme 14 eine vom Grundkörper 13 vorstehende hülsenförmige Ausbildung aufweisen. Die Aufnahmehülse ist insbesondere in das Ausfallende an der rechten Sitzstrebe 11 einsetzbar. Sie kann insbesondere auf die Hinterradachse aufgesteckt werden. Hierdurch ergibt sich ein besonders stabiler, zuverlässiger Sitz des Schaltauges 2 im Fahrradrahmen 1.

Außerdem ist im Grundkörper 13 eine zweite Aufnahme 15 zur Aufnahme eines Befestigungsmittels zur Befestigung eines Schaltwerks angeordnet. Die zweite Aufnahme 15 ist als Durchtrittsöffnung ausgebildet. Sie ist insbesondere mit einem Innengewinde 16 versehen.

In die zweite Aufnahme 15 ist insbesondere eine Schraube zur Befestigung eines Schaltwerks einschraubbar.

Vorzugsweise ist am Grundkörper 13 eine Anschlagschulter 17 ausgebildet. Die Anschlagschulter 17 dient als Anschlag für eine Justierschraube zur Feinjustierung der Position des Schaltwerks.

Außerdem ist das Schaltauge 2 mit einem Schutzelement 18 zum Schutz des Fahrradrahmens 1 vor Beschädigungen durch eine herabspringende Kette versehen.

Das Schutzelement 18 umfasst einen plattenförmigen Fortsatz 19. Das Schutzelement 18 umfasst außerdem einen nach innen über den Grundkörper 13 überstehenden Kragen 20.

Der Kragen 20 erstreckt sich kreisbogenförmig um die erste Aufnahme 14 herum. Mittels des Kragens 20 kann verhindert werden, dass sich die Kette zwischen dem kleinsten Ritzel und dem Fahrradrahmen 1, insbesondere dem Schaltauge 2, verklemmen kann.

Der Kragen dient außerdem als radialer Anschlag für die Nabe, um beim Einbau des Hinterrades die Positionierung der Nabe zur Achsbohrung im Rahmen zu vereinfachen.

Der plattenförmige Fortsatz 19 liegt von innen an der Sitzstrebe 11 an.

Der plattenförmige Fortsatz 19 kann die Sitzstrebe 11 auch leicht nach oben überragen, seitlich und von oben, d. h. zweiseitig, an der Sitzstrebe 11 anliegen oder diese umgreifen, insbesondere von drei Seiten, insbesondere von innen, oben und außen umgreifen.

Das Schaltauge 2, insbesondere das Schutzelement 18, weist insbesondere eine Form auf, welche an die Form des Fahrradrahmens 1 angepasst ist. Es weist insbesondere eine Form auf, welche derart an die Form des Fahrradrahmens 1 angepasst ist, dass es im eingebauten Zustand eine im Wesentlichen durchgehende, insbesondere eine stufenfreie und/oder spaltenfreie Oberfläche bildet.

Das Schutzelement 18 ist einteilig mit dem Schaltauge 2 ausgebildet.

Gemäß einer in den Figuren nicht dargestellten Alternative kann das Schutzelement 18 auf den Grundkörper 13 aufsteckbar ausgebildet sein. In diesem Fall weist das Schaltauge 2 eine mehrteilige Ausbildung auf. Dies ermöglicht es insbesondere, das Schutzelement 18 separat vom Schaltauge 2 auszutauschen.

Das Schutzelement 18 überdeckt insbesondere den sich an das rechte Ausfallende anschließenden Bereich der Sitzstrebe 11, insbesondere auf deren Innenseite.

Gemäß einer weiteren, in den Figuren nicht dargestellten Alternative steht der plattenförmige Fortsatz 19 um wenige Millimeter nach innen über die Innenseite der Sitzstrebe 11 vor. Hierdurch kann verhindert werden, dass die Kette an der Sitzstrebe 11 streifen kann. Es ist auch möglich, die Oberkante des plattenförmigen Fortsatzes 19 in tangentialer Verlängerung des Kragens 20 etwas nach innen vorstehen zu lassen. Auch hierdurch kann verhindert werden, dass die Kette in den Bereich zwischen der Sitzstrebe 11 und dem kleinsten Ritzel des Zahnkranzes rutschen kann.

Die Ausbildung des Schaltauges 2 mit dem Schutzelement 18 ist insbesondere für hochwertige Fahrradrahmen 1 und/oder für Fahrradrahmen aus einem empfindlichen oder schwer zu bearbeitenden Material nützlich.

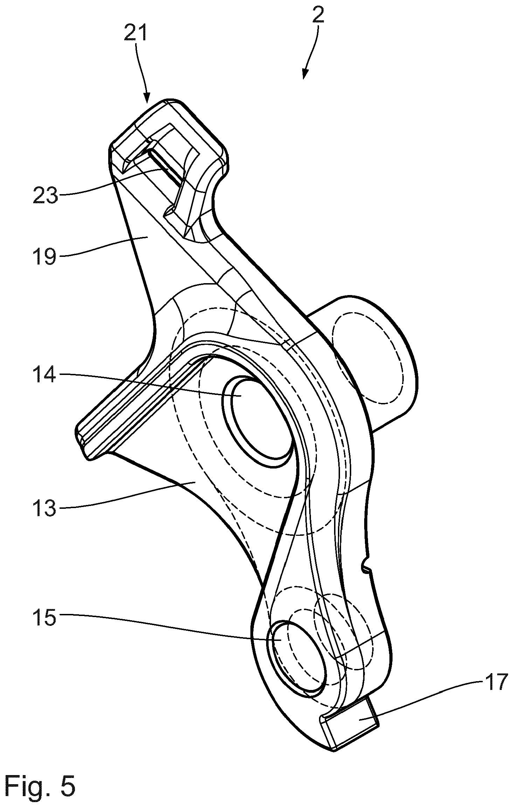

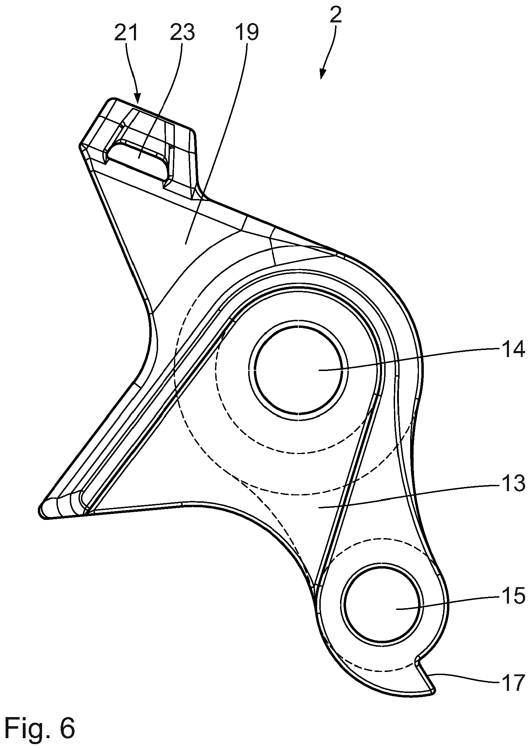

Im Folgenden wird unter Bezugnahme auf die Fig. 5 und 6 eine weitere Ausführung des Schaltauges 2 beschrieben. Der grundsätzliche Aufbau des Schaltauges 2 entspricht dem des bereits beschriebenen, auf den hiermit verwiesen wird. Identische Teile sind in den Figuren mit identischen Bezugszeichen versehen.

Das Schaltauge 2 gemäß der Ausführung, wie sie in den Fig. 5 und 6 exemplarisch dargestellt ist, weist an der Oberseite des plattenförmigen Fortsatzes 19 ein Befestigungselement 21 auf.

Das Befestigungselement 21 dient insbesondere zur Aufnahme und Befestigung eines Kabels, insbesondere eines Schaltwerkkabels. Dies ist insbesondere bei Verwendung eines elektrischen Schaltwerks vorteilhaft. Mit Hilfe des Befestigungselements 21 kann ein sicherer Sitz des Schaltwerckabels sichergestellt werden. Das Befestigungselement 21 kann insbesondere zur Positionierung des Schaltwerkkabels im Bereich des unteren Endes der Sitzstrebe 11 dienen. Es kann insbesondere ein Verrutschen des Schaltwerkkabels zuverlässig verhindern.

Das Befestigungselement 21 kann insbesondere eine nach außen gebogene Ausbildung aufweisen. Es weist insbesondere eine gekrümmte Anlagefläche 22 auf.

Die Anlagefläche 22 weist einen Krümmungsradius auf, welcher dem äußeren Radius des Schaltwerkkabels entspricht beziehungsweise an diesen angepasst ist.

Das Befestigungselement 21 weist eine Durchtrittsöffnung 23 auf. Die Durchtrittsöffnung 23 dient zur Aufnahme eines Kabelbinders, mittels welchem das Schaltwerkkabel sicher am Befestigungselement 21 befestigt werden kann. Anstelle eines Kabelbinders kann auch ein alternatives Mittel zur Festlegung des Schaltwerkkabels am Befestigungselement 21, beispielsweise ein Befestigungsclip oder eine Befestigungsspange, vorgesehen sein.

Die Anordnung eines Befestigungselements 21 am Schaltauge 2 ist exemplarisch zu verstehen. Sie ist nicht auf ein Befestigungselement 21 zur Befestigung eines Schaltwerkkabels beschränkt. Das Befestigungselement 21 ist vorzugsweise einteilig mit dem plattenförmigen Fortsatz 19 ausgebildet. Es kann auch mit dem plattenförmigen Fortsatz 19 verklebt oder verschweißt sein. Gemäß einer alternativen Ausführungsform ist das Befestigungselement 21 austauschbar am plattenförmigen Fortsatz 19 angeordnet. Es kann insbesondere mit dem plattenförmigen Fortsatz 19 verschraubt sein. In diesem Fall kann es je nach Bedarf am plattenförmigen Fortsatz 19 angeordnet oder auch entfernt werden. Das Befestigungselement 21 kann auch zur Befestigung anderer Teile, insbesondere Zubehörteile des Fahrrads, am Fahrradrahmen 1 dienen.

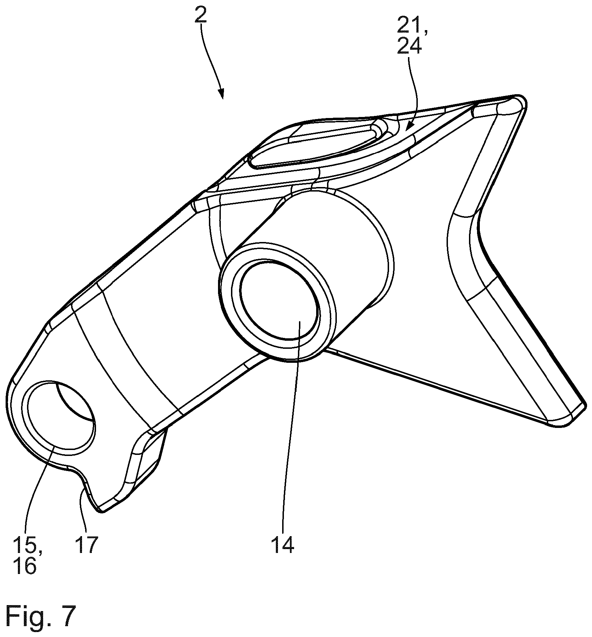

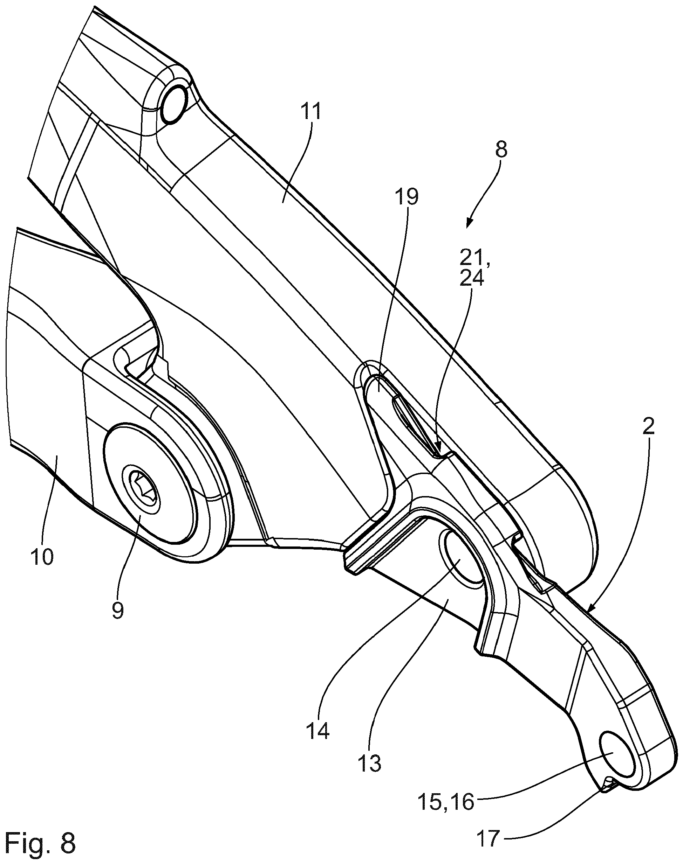

Im Folgenden wird unter Bezugnahme auf die Fig. 7 und 8 eine weitere Ausführung des Schaltauges 2 beschrieben. Der grundsätzliche Aufbau des Schaltauges 2 entspricht dem der bereits beschriebenen Varianten, auf die hiermit verwiesen wird. Identische Teile sind in den Figuren mit identischen Bezugszeichen versehen.

Das Schaltauge 2 gemäß der Ausführung, wie sie in den Fig. 7 und 8 exemplarisch dargestellt ist, weist ebenfalls ein Befestigungselement 21 zur Aufnahme und Befestigung eines Kabels, insbesondere eines Schaltwerckabels, auf.

Bei dieser Variante ist das Befestigungselement 21 als nutartige Aussparung 24 ausgebildet.

Die Aussparung 24 ist auf der der Sitzstrebe 11 zugewandten Seite des Schaltauges 2 angeordnet. Sie wird im eingebauten Zustand des Schaltauges 2 insbesondere derart von der Sitzstrebe 11 geschlossen, dass ein umfangsseitig umschlossener Kanal ausgebildet ist. Der Kanal dient zur Kabelführung, insbesondere für ein Schaltwerkkabel. Die Abmessungen des Kanals, insbesondere die Abmessungen der Aussparung 24, sind an den Außendurchmesser des aufzunehmenden Kabels angepasst. Das Kabel kann insbesondere frei verschiebbar in der Aussparung 24 angeordnet werden. Es kann auch mittels des Schaltauges 2 in der nutartigen Aussparung 24 an der Sitzstrebe 11 klemmend festgelegt werden.

## Patentansprüche

1. Schaltauge (2) zur Befestigung eines Schaltwerks an einem Fahrradrahmen (1) mit
- -einer ersten Aufnahme (14) zur Aufnahme einer Hinterradachse,
- -einer zweiten Aufnahme (15) zur Aufnahme eines Befestigungsmittels zur Befestigung eines Schaltwerks und
- -einem Schutzelement (18) zum Schutz des Fahrradrahmens (1) vor Beschädigungen durch eine herabspringende Kette,
**dadurch gekennzeichnet, dass** das Schaltauge (2) mehrteilig ausgebildet ist und das Schutzelement (18) als separater Bestandteil auf einen Grundkörper des Schaltauges (2) aufgesetzt ist.

2. Schaltauge (2) gemäß Anspruch 1, **dadurch gekennzeichnet, dass** das Schutzelement (18) als plattenförmiger oder profilierter Fortsatz (19) ausgebildet ist oder einen solchen aufweist.

3. Schaltauge (2) gemäß einem der vorhergehenden Ansprüche, **dadurch gekennzeichnet, dass** das Schutzelement (18) derart ausgebildet ist, dass es im Gebrauch am Fahrradrahmen (1) anliegt und/oder diesen umgreift.

4. Schaltauge (2) gemäß einem der vorhergehenden Ansprüche, **dadurch gekennzeichnet, dass** das Schutzelement (18) eine Form aufweist, welche an eine Form eines gegebenen Fahrradrahmens (1) im Bereich dessen rechten Ausfallendes angepasst ist.

5. Schaltauge (2) gemäß einem der vorhergehenden Ansprüche, **dadurch gekennzeichnet, dass** das Schutzelement (18) eine Form aufweist, welche an eine Form eines gegebenen Fahrradrahmens (1) im Bereich eines unteren Endes dessen rechter Sitzstrebe (11) angepasst ist.

6. Schaltauge (2) gemäß einem der vorhergehenden Ansprüche, **dadurch gekennzeichnet, dass** das Schutzelement (18) aus Aluminium, einer Aluminiumlegierung, Stahl, Titan, Carbon, Kunststoff oder Gummi ist.

7. Schaltauge (2) gemäß einem der vorherigen Ansprüche, **dadurch gekennzeichnet, dass** sie ein Befestigungselement (21) zur Befestigung eines Schaltwerkkabels oder eines Zubehörteils aufweist.

8. Schaltauge (2) gemäß Anspruch 7, **dadurch gekennzeichnet, dass** das Befestigungselement (21) als nutförmige Aussparung (24) ausgebildet ist.

9. Fahrradrahmen (1) mit einem Schaltauge (2) gemäß einem der vorhergehenden Ansprüche.

10. Fahrradrahmen (1) gemäß Anspruch 9, **dadurch gekennzeichnet, dass** das Schaltauge (2) austauschbar ist.

11. Fahrradrahmen (1) gemäß einem der Ansprüche 9 bis 10, **dadurch gekennzeichnet, dass** das Schaltauge (2) auf einer Innenseite eines rechten Ausfallendes angeordnet ist.

12. Fahrradrahmen (1) gemäß einem der Ansprüche 9 bis 11, **dadurch gekennzeichnet, dass** das Schutzelement (18) einen sich an das rechte Ausfallende anschließenden Bereich einer Sitzstrebe (11) überdeckt.

13. Fahrradrahmen (1) gemäß einem der Ansprüche 9 bis 12, **dadurch gekennzeichnet, dass** er Rahmenteile (3, 4, 5, 6, 7, 8, 10, 11) aus einem oder mehreren der folgenden Materialen aufweist oder daraus besteht: Carbon, Aluminium, einer oder mehrerer Aluminiumlegierungen, Titan, Stahl, Holz, Bambus, Kunststoff.

14. Fahrrad mit einem Fahrradrahmen (1) gemäß einem der Ansprüche 9 bis 13.

## Claims

1. A derailleur hanger (2) for attaching a switchgear to a bicycle frame (1) comprising
- a first receptacle (14) for receiving a rear wheel axle,
- a second receptacle (15) for receiving a fastening means for attaching a switchgear, and
- a protective member (18) for protecting the bicycle frame (1) from damage by a falling chain,
**characterized in that** the derailleur hanger (2) is formed in multiple parts and the protective member (18) is placed as a separate component on a base body of the derailleur hanger (2).

2. A derailleur hanger (2) according to claim 1, **characterized in that** the protective member (18) is designed as a plate-shaped or profiled extension (19) or has such an extension.

3. A derailleur hanger (2) according to any one of the preceding claims, **characterized in that** the protective member (18) is designed such that, in use, it abuts the bicycle frame (1) and/or engages around same.

4. A derailleur hanger (2) according to any one of the preceding claims, **characterized in that** the protective member (18) has a shape which is adapted to a shape of a given bicycle frame (1) in the region of its right-hand dropout.

5. A derailleur hanger (2) according to any one of the preceding claims, **characterized in that** the protective member (18) has a shape adapted to a shape of a given bicycle frame (1) in the region of a lower end of its right-hand seat stay (11).

6. A derailleur hanger (2) according to any one of the preceding claims, **characterized in that** the protective member (18) is made of aluminum, an aluminum alloy, steel, titanium, carbon, plastic or rubber.

7. A derailleur hanger (2) according to any one of the preceding claims, **characterized in that** it comprises a fixing member (21) for fixing a switchgear cable or an accessory component.

8. A derailleur hanger (2) according to claim 7, **characterized in that** the fixing member (21) is designed as a groove-shaped recess (24).

9. A bicycle frame (1) comprising a derailleur hanger (2) according to any one of the preceding claims.

10. A bicycle frame (1) according to claim 9, **characterized in that** the derailleur hanger (2) is replaceable.

11. A bicycle frame (1) according to any one of claims 9 to 10, **characterized in that** the derailleur hanger (2) is arranged on an inner side of a right-hand dropout.

12. A bicycle frame (1) according to any one of claims 9 to 11, **characterized in that** the protective member (18) covers a region of a seat stay (11) adjoining the right-hand dropout.

13. A bicycle frame (1) according to any one of claims 9 to 12, **characterized in that** it has frame parts (3, 4, 5, 6, 7, 8, 10, 11) made of one or more of the following materials, or consists thereof: carbon, aluminum, one or more aluminum alloys, titanium, steel, wood, bamboo, plastics.

14. A bicycle comprising a bicycle frame (1) according to any one of claims 9 to 13.

## Revendications

1. Patte de dérailleur (2) pour la fixation d'un dérailleur arrière sur un cadre de bicyclette (1) pourvu d'
- un premier réceptacle (14) destiné à recevoir un essieu de roue arrière,
- un deuxième réceptacle (15) destiné à recevoir un moyen de fixation pour fixer un dérailleur arrière, et
- un élément de protection (18) destiné à protéger le cadre de la bicyclette (1) des dommages causés par le saut d'une chaîne,
**caractérisée en ce que** la patte de dérailleur (2) est construite en plusieurs parties et l'élément de protection (18) est placé comme un composant séparé sur un corps de base de la patte de dérailleur (2).

2. Patte de dérailleur (2) selon la revendication 1, **caractérisée en ce que** l'élément de protection (18) est réalisé sous la forme d'un prolongement (19) en forme de plaque ou profilé ou présente un tel prolongement.

3. Patte de dérailleur (2) selon l'une quelconque des revendications précédentes, **caractérisée en ce que** l'élément de protection (18) est conçu de telle sorte qu'en utilisation, il repose contre et/ou s'engage autour du cadre de bicyclette (1).

4. Patte de dérailleur (2) selon l'une quelconque des revendications précédentes, **caractérisée en ce que** l'élément de protection (18) présente une forme adaptée à une forme d'un cadre de bicyclette (1) donné, au niveau de sa patte d'extrémité droite.

5. Patte de dérailleur (2) selon l'une quelconque des revendications précédentes, **caractérisée en ce que** l'élément de protection (18) présente une forme adaptée à une forme d'un cadre de bicyclette (1) donné au niveau d'une extrémité inférieure de son hauban droit (11).

6. Patte de dérailleur (2) selon l'une quelconque des revendications précédentes, **caractérisée en ce que** l'élément de protection (18) est en aluminium, en alliage d'aluminium, en acier, en titane, en carbone, en plastique ou en caoutchouc.

7. Patte de dérailleur (2) selon l'une quelconque des revendications précédentes, **caractérisée en ce qu'**elle présente un élément de fixation (21) pour fixer un câble de dérailleur arrière ou un accessoire.

8. Patte de dérailleur (2) selon la revendication 7, **caractérisée en ce que** l'élément de fixation (21) est formé comme un évidement en forme de rainure (24).

9. Cadre de bicyclette (1) pourvu d'une patte de dérailleur (2) selon l'une quelconque des revendications précédentes.

10. Cadre de bicyclette (1) selon la revendication 9, **caractérisé en ce que** la patte de dérailleur (2) est remplaçable.

11. Cadre de bicyclette (1) selon l'une quelconque des revendications 9 à 10, **caractérisé en ce que** la patte de dérailleur (2) est disposée sur un côté intérieur d'une patte d'extrémité droite.

12. Cadre de bicyclette (1) selon l'une quelconque des revendications 9 à 11, **caractérisé en ce que** l'élément de protection (18) recouvre une zone d'un hauban (11) attenant à la patte d'extrémité droite.

13. Cadre de bicyclette (1) selon l'une quelconque des revendications 9 à 12, **caractérisé en ce qu'**il présente de parties de cadre (3, 4, 5, 6, 7, 8, 10, 11) réalisées dans un ou plusieurs des matériaux suivants, ou en consiste : carbone, aluminium, un ou plusieurs alliages d'aluminium, titane, acier, bois, bambou, plastique.

14. Bicyclette pourvu d'un cadre de bicyclette (1) selon l'une quelconque des revendications 9 à 13.
